(19) Europäisches Patentamt
European Patent Office
Office européen des brevets

(11) **EP 2 302 449 B1**

(12) **EUROPEAN PATENT SPECIFICATION**

(45) Date of publication and mention
of the grant of the patent:
**28.08.2013   Bulletin 2013/35**

(51) Int Cl.:
*G02F 1/383* (2006.01)     *G02B 6/02* (2006.01)

(21) Application number: **10178424.7**

(22) Date of filing: **22.09.2010**

(54) **Optical fibre for sum frequency generation and method of producing it**

Optische Faser zur Summenfrequenzgeneration und Verfahren zu deren Herstellung

Fibre optique pour la génération de fréquence somme et son procédé de fabrication

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.09.2009   FR 0904512**
**26.10.2009   US 254924 P**

(43) Date of publication of application:
**30.03.2011   Bulletin 2011/13**

(73) Proprietor: **Draka Comteq B.V.**
**1083 HJ Amsterdam (NL)**

(72) Inventors:
• **Richard, Simon**
**91140 VILLEBON-SUR-YVETTE (FR)**
• **Burov, Ekaterina**
**92100 BOULOGNE-BILLANCOURT (FR)**
• **Pastouret, Alain**
**91300 MASSY (FR)**
• **Cavani, Olivier**
**91470 ANGERVILLIERS (FR)**

(74) Representative: **Algemeen Octrooi- en Merkenbureau**
**P.O. Box 645**
**5600 AP Eindhoven (NL)**

(56) References cited:
**US-A1- 2008 180 786**

• **PRUNERI V: "Recent advances in poled optical fibres" FIBRES AND OPTICAL PASSIVE COMPONENTS, 2005. PROCEEDINGS OF 2005 IEEE/ LEOS WORKSHOP ON MONDELLO, ITALY JUNE 22-24, 2005, PISCATAWAY, NJ, USA,IEEE, 22 June 2005 (2005-06-22), pages 164-167, XP010813760 ISBN: 978-0-7803-8949-6**
• **FAGE-PEDERSEN J ET AL: "Poling of glass waveguides by a metal-induced Z<(3)> enhancement" LASERS AND ELECTRO-OPTICS EUROPE, 2003. CLEO/EUROPE. 2003 CONFERENCE O N MUNICH, GERMANY 22-27 JUNE 2003, PISCATAWAY, NJ, USA,IEEE, PISCATAWAY, NJ, USA, 22 June 2003 (2003-06-22), pages 213-213, XP010710610 ISBN: 978-0-7803-7734-9**
• **PODLIPENSKY A ET AL: "Second-harmonic generation from ellipsoidal silver nanoparticles embedded in silica glass" OPTICS LETTERS OPT. SOC. AMERICA USA, vol. 28, no. 9, 1 May 2003 (2003-05-01), pages 716-718, XP002562932 ISSN: 0146-9592**
• **KEIJI TANAKA: "Optical nonlinearity in photonic glasses" JOURNAL OF MATERIALS SCIENCE: MATERIALS IN ELECTRONICS, KLUWER ACADEMIC PUBLISHERS, BO, vol. 16, no. 10, 1 October 2005 (2005-10-01), pages 633-643, XP019211794 ISSN: 1573-482X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the field of optical fibers, and more particularly, to an optical fiber adapted to generate a sum-frequency from two incident electromagnetic waves. The present invention moreover relates to an optical amplifier or a laser, particularly a laser emitting a wavelength in the visible spectral range.

Typically, lasers emitting in the visible spectrum can be employed in biotechnology instruments using laser-induced fluorescence and in light diffraction techniques. Other applications include graphical processing, image display, or applications for the semiconductor industry (i.e., digital television).

A laser that emits in the visible spectrum can be a gas laser. This type of laser typically employs argon for emitting a wavelength of 490 to 510 nanometers, copper vapor for emitting a wavelength of 510 to 570 nanometers, or helium-neon for emitting a wavelength of 633 nanometers. These are first-generation lasers, the basic principle of which consists in discharging an electric current through a gas to produce light. However, the gas laser has a limited lifetime and requires a bulky container. It additionally suffers from limited electrical efficiency, complexity of maintenance, and the need to dissipate heat energy which limit the development and application of the gas laser.

A laser that emits in the visible spectrum can also be a semiconductor (III-V) technology-based laser diode. The laser diode employs inter-band electron transitions in semiconductor materials. Lasers which emit in the red range have been available commercially from several manufacturers were more than 20 years. The emergence of commercial laser diodes was observed, emitting at a 488 nanometer wavelength, as a replacement for argon-based lasers for several applications. Nevertheless, such laser diodes are somewhat limited as regards the output power that can be achieved in single mode operation. Further, certain wavelengths in the green and yellow cannot be obtained.

A laser emitting in the visible spectrum can be a frequency doubling laser. Typically, a frequency doubling laser emitting in the visible spectrum employs an infrared laser source the frequency of which is doubled by the use of a non-linear medium. The infrared laser source in the range of 900 nanometers to 1300 nanometers can be a laser diode. The source can also be a diode or laser-pumped solid-state laser or DPSS (Diode Pumped Solid State Laser), for example of the Nd :YVO$_4$ or Nd :YAG kind. One can also employ an optically pumped semiconductor laser or a fiber laser (e.g. a ytterbium-doped fiber laser). In general, the non-linear medium employed for frequency doubling should exhibit a second-order non-linearity characteristic, in other words, a sufficiently high $\chi(2)$ parameter. Typically, a non-linear crystal (e.g. LiNbO$_3$, KDP, KTP, BBO, LBO) is used, or a silica optical fiber whose non-linearity is permanently induced by applying an electric field at high temperature. KDP is monopotassium phosphate, KTP is potassium titanyl phosphate, BBO is beta barium borate, and LBO is lithium triborate.

The efficiency of energy conversion depends on the non-linear medium. In effect, the principal drawbacks of the frequency doubling laser originate from the non-linear medium employed.

Firstly, the non-linear crystal has a limited length and, as a consequence, a limited total non-linear gain. Thus, to obtain reasonable conversion efficiencies under low peak power conditions, it is necessary to come up with complex schemes for intra-cavity wavelength conversion. Secondly, the polarization of an optical fiber necessitates a local secondary treatment of the optical fiber, which only makes it possible to obtain samples of non-linear optical fiber several centimeters long, with poor non-linearity (e.g. around 0.01 pm/V, which is a 100 times less than that for a non-linear crystal).

For efficient sum-frequency generation from two frequencies $\omega_1$ and $\omega_2$, the waves also need to be phase tuned (i.e., show zero or negligible phase mismatch $\Delta k$). Phase mismatch $\Delta k$ is defined by the relation $\Delta k = k_3 - k_1 - k_2$, in which $k_1$, $k_2$, and $k_3$ respectively the wave vectors of the two incident waves, and of the output wave.

In an optical fiber, the wave vector k is given by the following expression:

$$k = \frac{2 \pi \, n_{eff}(\lambda)}{\lambda}$$

in which $\lambda$ is the wavelength, and $n_{eff}(\lambda)$ is the effective refractive index for wavelength $\lambda$. The effective refractive index $n_{eff}$ is a function of the optical fiber's refractive index profile and the mode of propagation of the wave in the optical fiber.

Coherence length is another parameter making it possible to characterise the efficiency of energy conversion of $\omega_1$ and $\omega_2$ waves to the $\omega_3$ wave. Coherence length Lc is defined by the relation:

$$Lc = \frac{\pi}{\Delta k}$$

The article "Second harmonic generation from ellipsoidal silver nanoparticles embedded in silica glass" by A. Podlipensky et al., published in Optics Letters, vol. 28, No. 9, May 1, 2003, describes frequency doubling in a silica material containing two doped layers of silver nanoparticles exhibiting a second-order non-linear effect. However, this article concerns the properties of a bulk material and does not include any mention of a guiding structure.

Insertion of metallic nanostructures into an optical fiber to improve non-linearity properties is also known. For example, the article "Ag nanocrystal-incorporated germano-silicate optical fiber with high resonant non linearity", by Aoxiang Lin et al., Applied Physics Letters vol. 93, 021901, 2008, discusses insertion of silver nanoparticles in order to obtain a third order non linearity in a germanium-doped silican optical fiber. However, this publication does not provide details of the profile of a silica optical fiber in a way that achieves second order non linearity properties, and phase matching between the waves present in the process of generating the sum frequency.

US 2008/180796 discloses an optical fiber having a circular cross section and a tapered portion located within the composite resonant EM structure, including a plurality of metal nanoresonators and a non-linear material.

PRUNERI V: "Recent advances in poled optical fibers" FIBERS AND OPTICAL PASSIVE COMPONENTS, 2005. PROCEEDINGS OF 2005 IEEE/ LEOS WORKSHOP ON MONDELLO, ITALY JUNE 22-24, 2005, PISCATAWAY, NJ, USA,IEEE, 22 June 2005 (2005-06-22), pages 164-167, relates to an optical fiber composed of a dielectric matrix comprising metallic nanostructures adapted to increase the second order nonlinearity property of the fiber.

FAGE-PEDERSEN J ET AL: "Poling of glass waveguides by a metal-induced Z<(3)> enhancement" LASERS AND ELECTRO-OPTICS EUROPE, 2003. CLEO/EUROPE. 2003 CONFERENCE O N MUNICH, GERMANY 22-27 JUNE 2003, PISCATAWAY, NJ, USA,IEEE, PISCATAWAY, NJ, USA, 22 June 2003 (2003-06-22), pages 213-213 discloses a three layer structure composed of a dielectric matrix comprising metallic nanostructures adapted to increase the second order nonlinearity property.

There is consequently a need for an optical fiber having second-order non linearity (e.g., a sufficiently high $\chi$ (2) parameter) that makes it possible to achieve sum frequency generation with efficient energy conversion.

In order to achieve frequency doubling or, in more general terms, sum frequency generation with efficient energy conversion, the invention provides an optical fiber including metallic nanostructures for boosting the second-order non linearity. Typically, the optical fiber has a refractive index profile that ensures a phase matching condition. Nanostructures are structures having a least one of its dimensions (length, width or height) in the range of the nanometric scale (i.e. a dimension between 1 nanometer and 100 nanometer), whatever its shape or manufacturing process, either chemical or physical, such as synthesis, precipitation within a medium for example.

The invention provides in an embodiment an optical fiber comprising an central core, surrounded by an optical cladding, the optical fiber being composed of a dielectric matrix comprising metallic nanostructures adapted to increase the second order non linearity property of the optical fiber. Both the central core as well as the optical cladding are composed of a dielectric matrix, respectively the core dielectric matrix and the cladding dielectric matrix.

More particulary, the present invention relates to an optical fiber according to claim 1.

The metallic nanostructures are e.g. manufactured metallic nanoparticles.

According to another embodiment, the core dielectric matrix and/or the cladding dielectric matrix comprises silica doped with an element selected from the group consisting of germanium (Ge), phosphorus (P), fluorine (F), boron (B), aluminum (Al), tantalum (Ta), and tellurium (Te), and a combination of two or more thereof.

According to yet another embodiment, the metallic nanostructures are present in the central core of the optical fiber.

The optical fiber's metallic nanostructures are present in the optical fiber's mode field (e.g. in the cladding of the optical fiber, in the immediate vicinity of the core).

According to yet another embodiment, the metallic nanostructures include of a metal selected from the group consisting of gold (Au), silver (Ag), copper (Cu), aluminum (Al), tungsten (W), nickel (Ni), palladium (Pd), rhodium (Rh), iridium (Ir), ruthenium (Ru), molybdenum (Mo), osmium (Os), and platinum (Pt), and a combination of two or more thereof.

According to yet another embodiment, the metallic nanostructures have a melting temperature greater than or equal to 950 °C.

According to yet another embodiment, the metallic nanostructures have a temperature of evaporation greater than or equal to 2100 °C.

According to yet another embodiment, the metallic nanostructures have an oval shape, the minor diameter being oriented perpendicularly to the axis of the optical fiber. It is preferred that the most part of the nanostructures has an oval shape. An oval shape is the shape that is obtained during the optical fiber's present manufacturing process, based on insertion of spherical nanostructures in the porous core by impregnation. However, a spherically shaped nanostructure (ratio b/a = 1) will also work. In addition, undefined shapes of the nanostructure, i.e. obtained by precipitation of metal within a medium, may also be used.

With the most part of the nanostructures, for this an any other embodiment of the invention cited in this specification, is meant more that 50 vol%, preferably more than 70 vol.%, more preferably more than 80 vol.% and even more preferably 90 vol.%.

According to yet another embodiment, the minor diameter of the metallic nanostructures is comprised between 1 nanometer and 200 nanometer, preferably between 5 nanometer and 100 nanometer. It is preferred that the most part of nanostructures has the minor diameter between 1 and 200 nanometer.

According to yet another embodiment, the major diameter of the metallic nanostructures is comprised between 1 nanometer and 200 micrometer. It is preferred that the most part of nanostructures has the major diameter within these ranges.

According to yet another embodiment, the metallic nanostructures have a ratio of the major diameter over the minor diameter which is comprised between 1 and 2000, preferably between 1 and 100. It is preferred that the most part of nanostructures has this diameter ratio within these ranges.

The diameter of the central core is comprised between 2 micrometer and 10 micrometer, preferably between 2 micrometer and 3 micrometer.

The refractive index difference Dn between the central core and the optical cladding of the optical fiber is from 0.3 % to 3 %, preferably from 2 % to 2.5%, of the refractive index of the optical cladding

The diameter of the central core is tapered (i.e. profiled) in the longitudinal direction of the optical fiber over a length, e.g. between two ends of the optical fiber.

The ratio of the diameter of the central core at an end of the optical fiber to the diameter of the central core at the other end of the optical fiber is comprised between 1 and 1.5.

According to yet another embodiment, the coherence length (Lc = $\pi/\Delta k$) is greater than 300 micrometers, preferably greater than 10 centimeters.

The invention also provides an optical amplifier comprising at least one portion of the optical fiber according to the invention and as described above. The invention also provides a laser comprising at least one portion of the optical fiber according to the invention and as described above.

In yet another embodiment, the laser comprises two pump laser sources. In yet another embodiment, the laser comprises a portion of an optical fiber performing mode conversion. In yet another embodiment, the laser emits a wavelength in the visible spectral range.

In an embodiment the invention relates to an optical fiber comprising a central core adapted to transmit an optical signal, and an optical cladding around the central core adapted to confine the transmitted optical signal in the core, the fiber being composed of a dielectric matrix comprising metallic nanostructures adapted to increase the second order non linearity effects of the fiber. The dielectric matrix of the central core and/or of the optical cladding may consist of silica or doped silica. The metallic nanostructures are positioned in the core of the fiber or in the cladding of the fiber, in the immediate vicinity of the core. The diameter of the core is profiled in the longitudinal direction of the fiber between two ends of the fiber and the ratio of the diameter of the central core at an end of the fiber to the diameter of the central core at the other end of the fiber is comprised between 1 and 1,5.

Further characteristics and advantages of the invention will become more clear from reading the description which follows of some embodiments of the invention provided by way of example, with reference to the attached drawings, in which:

- figure 1, schematically depicts an example of an optical fiber according to the invention, comprising metallic nanostructures;
- figure 2, schematically depicts a diagram showing the process of sum-frequency generation of an example of an optical fiber of the invention;
- figure 3, schematically depicts the refractive index profile of an example of an optical fiber according to the invention;
- figure 4, schematically depicts a source frequency doubling laser including an example of an optical fiber according to the invention;
- figure 5, schematically depicts a sum-frequency generating laser, including an example of an optical fiber according to the invention.

The present invention embraces an optical fiber having second-order non-linearity (i.e., a sufficiently high $_\chi(2)$ parameter) that makes it possible to achieve sum-frequency generation (SFG) with efficient energy conversion.

The optical fiber according to the invention comprises a central core to provide optical signal transmission, and an optical cladding surrounding the central core to confine the transmitted optical signal within the central core.

The present optical fiber is typically composed of a dielectric matrix including metallic nanostructures. The metallic nanostructure typically increase the second-order non-linearity effect of the optical fiber.

In the optical fiber, the phase mismatch between two waves entering the optical fiber and a wave exiting the optical fiber, defined by $\Delta k = k_3 - k_1 - k_2$, is less than $10^4$ radian per metre, in which $k_1$ and $k_2$ respectively the wave vectors of the first and second input waves, and $k_3$ is the wave vector of the output wave.

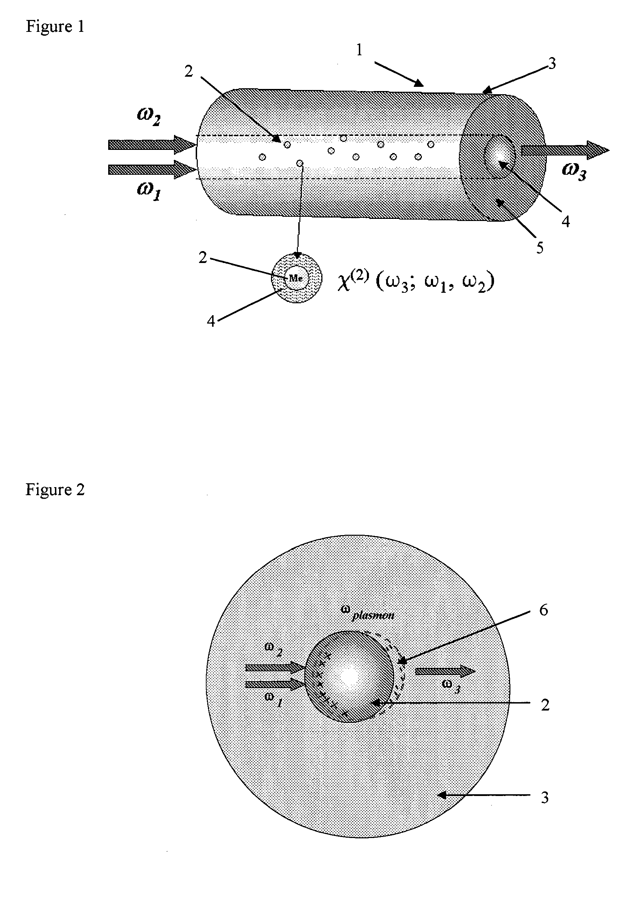

Figure 1 schematically depicts an exemplary optical fiber 1 comprising metallic nanostructures 2 within the dielectric matrix 3 of optical fiber 1.

An optical fiber 1 is conventionally composed of a central core 4 having the function of transmitting and/or amplifying an optical signal, and an optical cladding 5, having the function of confining the optical signal within the central core 4. To this effect, the refractive indices of the central core $n_c$ and the optical cladding ng are such that $n_c > n_g$, viz.

the refractive index of the central core is typically greater than the refractive index of the optical cladding. In the exemplary optical fiber 1 shown in Figure 1, the metallic nanostructures 2 are located within central core 4.

The exploded view on the lower side of Figure 1 is a cross section is shown of a nanostructure (solid area denoted with "Me") surrounded by the central core glass matrix in the vicinity of the nanostructure (wavy area). This shows that the metallic nanostructures 2 are embedded within the dielectric matrix 3.

An optical wave can be characterized by its angular frequency $\omega$ or by its wavelength $\lambda$ which are related as follows from the following equation, wherein c is the speed of light in a vacuum:

$$\omega = \frac{2\pi c}{\lambda}$$

It is known to use a non-linear medium to obtain an optical wave of angular frequency $\omega_3$ from two incident optical waves of angular frequency $\omega_1$ and $\omega_2$ respectively, the angular frequency $\omega_3$ being the sum of the angular frequencies $\omega_1$ and $\omega_2$. Such a process is specified by that term of sum-frequency generation. In the particular case where $\omega_1 = \omega_2$, then $\omega_3 = 2\omega_1$ (that is $\lambda_3 = \frac{1}{2}\lambda_1$), and it is called frequency doubling. In this regard, frequency doubling is a particular type of sum-frequency generation. Energy conversion of the two waves of angular frequency $\omega_1$ and $\omega_2$ to the third wave of angular frequency $\omega_3$ is at its most efficient when the waves are phase matched (i.e., when the two input waves and the output wave exhibit negligible phase mismatch $\Delta k$).

Figure 2 schematically shows the process of sum-frequency generation in optical fiber 1. A metallic nanostructure 2 present in the dielectric matrix 3 of optical fiber 1 is shown. The metallic nanostructure 2 has an electron cloud 6 at its surface and positive charges at its inner portion.

Electron cloud 6 around the metallic nanostructure 2 has a collective excitation angular frequency called surface plasmon resonance frequency $\omega_{plasmon}$. The electron cloud 6 can consequently be excited by absorption of two incident photons having angular frequency $\omega_1$ and $\omega_2$ such that $\omega_1 + \omega_2$ approximates the surface plasmon resonance frequency $\omega_{plasmon}$. The electron cloud 6 then loses excitation by emitting a photon of angular frequency $\omega_3$ such that $\omega_3 = \omega_1 + \omega_2$.

The gain represents the amplification factor for the output signal (i.e., having angular frequency $\omega_3$) per unit of length. To have an overall positive gain, the amplification factor should be greater than the absorption by the metallic nanostructures 2 (i.e., the loss rate by absorption of signal $\omega_3$ per unit of length). The value for the surface plasmon resonance frequency $\omega_{plasmon}$ should be chosen so that the generated angular frequency $\omega_3$ corresponds to an overall positive gain.

The value of the surface plasmon resonance frequency $\omega_{plasmon}$ and the strength of the non-linear effect with insertion of metallic nanostructures 2 depends on i) the metal/dielectric matrix combination; ii) on the size of the nanostructures 2; iii) on the form of the nanostructures 2; iv) on the concentration of the nanostructures 2; and v) on the nature of the dielectric matrix 3.

Typically, the dielectric matrix 3 of the optical fiber is silica. The core dielectric matrix can also be doped silica. In particular, the refractive index difference Dn of the central core 4 can be obtained by doping the dielectric matrix 3 of the central core 4 with an element chosen from germanium (Ge), phosphorus (P), fluorine (F), boron (B), aluminum (Al), tantalum (Ta), tellurium (Te) or a combination of two or more of these.

The core dielectric matrix and/or the cladding dielectric matrix comprises silica. The dielectric matrix of the optical cladding can be doped with an element selected from germanium (Ge), phosphorus (P), fluorine (F), boron (B), aluminum (Al), tantalum (Ta), tellurium (Te) or a combination of two or more of these.

The size and the shape of the metallic nanostructures 2 may have an influence on the value of the surface plasmon resonance frequency $\omega_{plasmon}$ and the shape of the absorption spectrum. Generally speaking, if the size of the nanostructures 2 is decreased in the axis of polarization of the electric field, the surface plasmon resonance frequency $\omega_{plasmon}$ is shifted towards higher angular frequency values.

The nanostructures 2 typically have an oval shape, with a minor diameter a and a major diameter b, the minor diameter a typically being oriented perpendicular to the axis of the optical fiber. It should be noted that also for other, less defined structures, such as a cylindrical shape with rounded edge a minor diameter a and a major diameter b will be present. These types of structures are also incorporated in the present invention and the following explanation also applies to these types of nanostructures. To the extent possible, it is desirable for more than 75 volume percent of the metallic nanostructures 2 (e.g., 90 volume percent or more) to have an oval-like shape (e.g., quasi-cylindrical with rounded edges). As noted, nanostructures have at least one nanometric dimension (e.g., a dimension between about 1 nanometer and 100 nanometers).

The minor diameter a can be comprised between 1 nanometers and 200 nanometers, preferably between 5 nanometers and 100 nanometers. The major diameter b is comprised between 1 nanometer and 200 micrometer. A diameter of 1 nanometer corresponds to several hundreds of atoms which is sufficient to obtain an optical effect.

The ratio of the major diameter over the minor diameter b/a can be comprised between 1 and 2000, preferably between 1 and 100. More preferably the ratio b/a is greater than 1.0 since 1.0 would give rise to a spherically shaped nanostructure. The ovaling of metallic nanostructures 2 can be controlled, for example by adjusting optical fiber production parameters, e.g. during the drawing of the optical fiber. The nanostructures 2 can for instance have a spherical shape (i.e. ratio b/a is 1.0) as illustrated in the example of figure 2.

Notwithstanding the foregoing, employing metallic nanostructures having other, less defined shapes is within the scope of the present invention.

In yet another embodiment, metallic nanostructures in gold or silver elongated in the optical fiber's longitudinal axis with a minor diameter of 50 nanometers and a major diameter of 100 nanometers will for example have a surface plasmon resonance frequency $\omega_{plasmon}$ of the order of 400 nanometers.

Optionally, the metallic nanostructures 2 are of metal which allows them to withstand operating conditions in the optical fiber production processes. For example, the metallic nanostructures 2 can have a melting temperature greater than or equal to 950 °C, and an evaporation temperature greater than or equal to 2100 °C.

Optionally, the material of the metallic nanostructures 2 is compatible with the desired propagation parameters for the optical fiber, for example its refractive index, or its scattering losses.

The material making up the metallic nanostructures 2 can for example be chosen from gold (Au), silver (Ag), copper (Cu), aluminum (Al), tungsten (W), nickel (Ni), palladium (Pd), rhodium (Rh), iridium (Ir), ruthenium (Ru), molybdenum (Mo), osmium (Os), and platinum (Pt), or a combination of two or more of these.

The metallic nanostructures are positioned in the optical signal path. Thus, the nanostructures can for example be inserted in the central core or in the optical cladding in the immediate vicinity of the central core. With in the immediate vicinity of the central core is meant that the most part of the nanostructures are in the part of the optical cladding that is within the mode field of the optical fiber.

To limit the losses introduced by the nanostructures, the nanostructure volumetric concentration in the central core, or in the optical cladding in the immediate vicinity of the central core, is preferably less than 2%. The volumetric concentration of nanostructures is preferably less that 2.0 % of the doped zone, i.e. either being the total central core in case the nanostructures are present in the central core of being the doped part of the optical cladding in case the nanostructures are present in the optical cladding. The lower limit of the concentration of nanostructures is for example 0.01 % or even as low as 0.001 %.

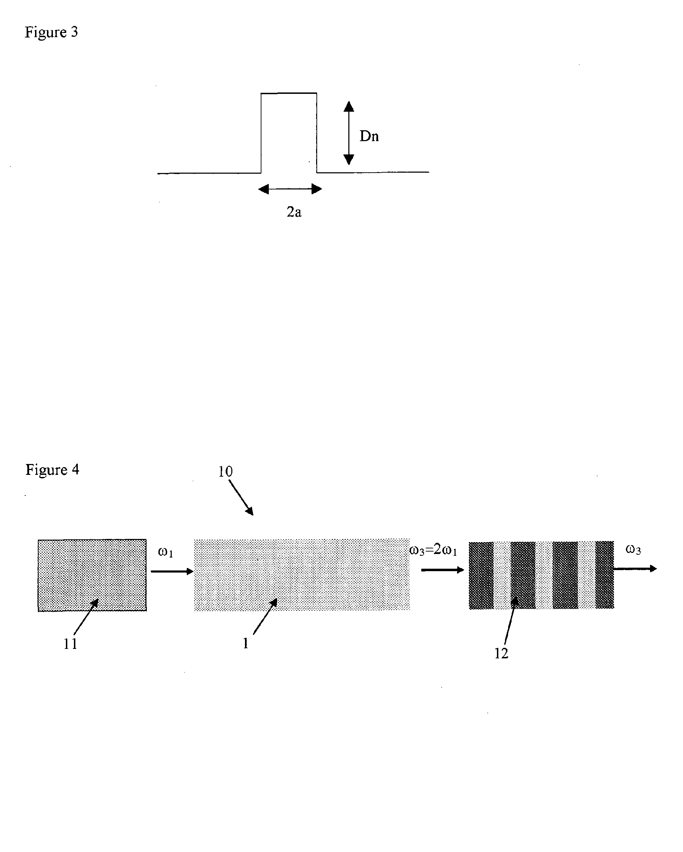

Figure 3 shows a refractive index profile of an optical fiber according to the invention. The central core 4 of the optical fiber has a diameter 2a and an index difference Dn with respect to the optical cladding 5. These two parameters are chosen to optimise the effective index values $n_{eff}$ of each wave participating in the sum frequency generation process, in order to obtain a value for coherence length Lc which is as high as possible. Thus, phase mismatch $\Delta k$ is reduced, and phase matching between waves $\omega_1$, $\omega_2$ and $\omega_3$ is obtained.

For an efficient sum-frequency generating process, the phase mismatch $\Delta k$ between input waves $\omega_1$, $\omega_2$ and output wave $\omega_3$ should preferably be less than $10^4$ radian per metre. The central core 4 of the optical fiber 1 has a diameter 2a comprised between 2 and 10 micrometers, preferably between 2 and 3 micrometers, and a refractive index difference Dn with optical cladding 5 comprised between 0.3 and 3 % of optical cladding 5 index, preferably between 2 and 2.5 %. The ranges of values for diameter 2a and the refractive index difference Dn of the central core 4 make it possible to optimize the effective indices of the waves $\omega_1$, $\omega_2$ and $\omega_3$ involved in sum-frequency generation in order to obtain a coherence length greater than 300 micrometers, equivalent to a phase shift less than $10^4$ rad.m$^{-1}$. In some embodiments, the coherence length can be greater than 10 cm. Thus, during a sum frequency generating process, the waves of angular frequency $\omega_1$, $\omega_2$ and $\omega_3$ are phase matched.

The effective index $n_{eff}$ of a wave also depends on wave propagation mode. In some embodiments different propagation modes are allowed for each of the waves $\omega_1$, $\omega_2$ and $\omega_3$ in order to maximize the coherence length.

The ranges of value for the diameter 2a and the refractive index difference Dn of the central core 4 are generally representative of the theoretical or ideal profile of the optical fiber. Typically, the production constraints on the optical fiber can lead to a slightly different profile. Under these conditions, it can be difficult to produce an optical fiber with sufficient accuracy in index profile parameters to achieve a desired coherency length Lc.

In view of the foregoing, in some exemplary embodiments of the optical fiber of the present invention, the optical fiber's refractive index profile varies along the longitudinal axis thereof.

Thus, one can be certain that from one end to the other end, there is a point at which the fiber profile has the desired values. In other words, as a signal passes from one end of the optical fiber to the other, it will pass through at least one point having the appropriate properties.

The central core diameter 2a of the optical fiber be diminishes progressively from one end A to another end B. In other words, the central core diameter 2a is profiled (i.e. tapered) in the longitudinal direction of the optical fiber between two ends thereof.

This tapering or profiling concept can be better understood by referring to Tables 1 and 2 which show the profile of an optical fiber 1 performing a frequency doubling application.

Table 1 shows one example of refractive index profile making it possible to obtain phase matching for an incident

wave of wavelength $\lambda_1=\lambda_2 = 1064$ nm and an output wave of wavelength $\lambda_3 = 532$ nm.

TABLE 1

| Fiber parameters | 2a ($\mu$m) | Dn (%) | $n_{eff}$ LP01 @ 1064nm | $n_{eff}$ LP02 @ 532nm | Lc (cm) |
|---|---|---|---|---|---|
| Values | 2.450 | 2.13 | 1.463237 | 1.463239 | 13.3 |

Here it can be seen that an optical fiber 1 having a central core 4 of diameter 2a equal to 2.450 $\mu$m and an index difference Dn of 2.13% with respect to the optical cladding 5 of the optical fiber, makes it possible to obtain effective indices of respectively 1.463237 and 1.463239 for a wavelength of 1064 nm propagating in an LP01 mode and for a wavelength of 532 nm propagating in an LP02 mode. Thus, a coherence length Lc of 13.3 centimeters can be obtained, and consequently a phase mismatch of less than $10^4$ rad·m$^{-1}$.

Typically, when producing the optical fiber, the diameter of the central core 4 is determined with an accuracy of 1/1000 which makes it possible to provide a coherence length Lc of the order of 10 cm. In some optical-fiber embodiments that include a tapered core (i.e., a tapered central core diameter), for at least a portion of the optical fiber, the optical fiber's outer diameter may be substantially constant along a length of the optical fiber over which the central core's diameter is tapered (i.e., tapered core, constant optical fiber). Alternatively, for at least a portion of the optical fiber, the optical fiber's outer diameter may be tapered along a length of the optical fiber over which the central core's diameter is tapered (i.e., tapered core, tapered optical fiber).

Table 2 gives an example of index profile for the same application as an optical fiber in table 1, but which takes manufacturing uncertainties into account.

TABLE 2

| | 2a ($\mu$m) | Dn (%) | $n_{eff}$ LP01 @ 1064nm | $n_{eff}$ LP02 @ 532nm | Lc (cm) |
|---|---|---|---|---|---|
| End A of the fiber | 2.548 | 2.13 | 1.463990 | 1.464586 | $446\times10^{-4}$ |
| Intermediate position in the fiber | 2.450 | 2.13 | 1.463237 | 1.463239 | 13.3 |
| End B of the fiber | 2.352 | 2.13 | 1.462439 | 1.461944 | $537\times10^{-4}$ |

The optical fiber according to the invention can exhibit a conical refractive index profile in its longitudinal direction. The ratio between the central core diameter at one end of the optical fiber and the central core diameter at the other end of the optical fiber is comprised between 1 and 1.5. For example, the diameter 2a of the central core 4 of the optical fiber 1 in table 2 progressively decreases from a value of 2.548 $\mu$m at its end A down to a value of 2.352 $\mu$m at its end B. This means we can be sure that at an intermediate position between the ends A and B of optical fiber 1, the profile will have a diameter 2a of 2.450 $\mu$m which allows a coherence length of 13.3 cm, and as a consequence, phase matching between the waves of wavelength $\lambda_3$ and $\lambda_1$

A preferred value for the distance between fiber-ends A and B depends on i) the attenuation of the optical fiber; ii) the degree of the second-order non-linear effect in the optical fiber; and iii) the power of the incident signals. In effect, in an optical fiber without attenuation, for a given power of incident signals, the greater the distance between points A and B, the greater the efficiency of energy conversion of waves $\omega_1$, $\omega_2$ into the wave $\omega_3$. Nevertheless, an optical fiber exhibiting an attenuation of the signal does impose limitation of the distance between the points A and B. The order of magnitude of the optimal distance AB is given by the attenuation length $L_{att}$ determined by the relation $L_{att}=1/\alpha$ where $\alpha$ is the attenuation constant for the optical fiber expressed in meters$^{-1}$.

For example, for an optical fiber having an attenuation of the order of 100 dB/km, the distance AB should be less than 100 meters, and preferably less than 30 meters.

In the optical fiber, the metallic nanostructures are inserted into the central core or the immediate vicinity of central core. The reduced diameter of the central core of the optical fiber allows a better overlap of the propagation modes in the optical fiber with the region comprising the nanostructures, thereby improving the second-order non-linear effect in the optical fiber.

Some examples of the method for inserting metallic nanostructures into the optical fiber will be described more particularly in the case where the metallic nanostructures are nanostructures of gold of 5 nanometers in diameter, and optical fiber has a germanium doped silica central core.

In a first method, the porous core of a preform obtained by modified chemical vapor deposition (MCVD) can be first impregnated with a suspension (e.g. a solution) of gold nanostructures. This is followed by calcination to eliminate the surface organic ligands. Calcination is a thermal treatment allowing the elimination of all organic species coming from the impregnation solution for example. When a suspension of nanostructures is used, the nanostructures often comprise organic ligands on their surface allowing the nanostructures to stay stable in suspension in order to avoid agglomeration and deposition of nanostructures which would be detrimental to the impregnation step. However, after the impregnation step has finished it is desirable that these organic ligands are removed from the preform, for example by calcination or other applicable methods known to a person skilled in the art.

Gold nanostructures concentration and size can be adapted to obtain the desired degree of metal doping. The doped nanostructure layer can then be agglomerated by sintering and the preform is reduced in diameter at 2200 °C prior to being drawn to form an optical fiber.

Another example of a method for inserting the gold nanostructures consists in firstly incorporating metallic precursors into the porous core of the preform, for example soluble metal salts. An annealing step under reducing conditions then makes it possible to generate the gold nanostructures. This treatment can be applied before or after sintering the doped layer of central core. The metal can be reduced either using a chemical reducing agent incorporated with the metallic precursor, or by the action of a gas, for example a mixture of hydrogen ($H_2$) and an inert gas such as helium (He), argon (Ar), or nitrogen ($N_2$). It will be understood that these examples of inserting metallic nanostructures are simply an indication, and that the metallic nanostructures can be inserted into optical fiber by any other suitable means.

The optical fiber can be advantageously employed in a laser, in particular in a laser emitting a wavelength in the visible range. A laser emitting in the visible, that includes the optical fiber has a non-linear medium having strong second-order non linearity.

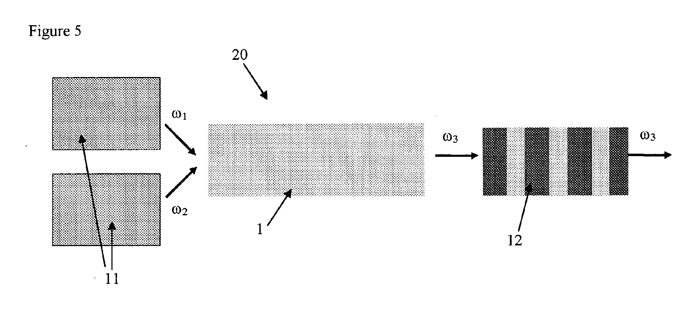

Figures 4 and 5 show examples of a laser 10 and 20 that include an optical fiber 1 according to the present invention.

Figure 4 is a diagram of a frequency doubling laser 10 which includes the optical fiber 1. The optical fiber 1 performs frequency doubling from a laser source 11 emitting a wave $\omega_1$. Frequency doubling laser 10 can emit a wave $\omega_3$ having a wavelength in the visible range. For example, a laser source 11 emitting a wave $\omega_1$ of wavelength 1064 nm makes it possible to emit a wave $\omega_3$ of wavelength 532 nm.

Figure 5 is a diagram of a sum frequency generating laser 20 that includes the optical fiber 1. The optical fiber 1 produces a sum of the frequencies of input waves $\omega_1$, $\omega_2$ from two pump laser sources 11.

Table 3 gives typical examples of sum frequency generation and frequency doubling in the visible range.

TABLE 3

| Pump 1 / Pump 2 | 914 nm DPSS | 946 nm DPSS | 980 nm laser diode | 1064 nm Yb laser | 1342 nm DPSS | Telecom Raman pump (example 1480 nm) | 1550 nm Er laser |
|---|---|---|---|---|---|---|---|
| 914 nm DPSS | 457 | | | | | | |
| 946 nm DPSS | 465 | 473 | | | | | |
| 980 nm laser diode | 473 | 481 | 490 | | | | |
| 1064 nm DPSS or fiber laser | 492 | 501 | 510 | 532 | | | |
| 1342 nm DPSS | 544 | 555 | 566 | 593 | 671 | | |
| Telecom Raman pump (example 1480nm) | 565 | 577 | 590 | 619 | 703 | 740 | |
| 1550 nm Er laser | 575 | 587 | 600 | 630 | 719 | 757 | 775 |

The examples of laser 10, 20 in figures 4 and 5 can comprise the optical fiber 1 the profile of which has a tapered (e.g. conical) profile in the longitudinal direction. In other words, the central core's diameter 2a diminishes progressively.

The examples of laser 10, 20 shown can also include a mode converter to modify the mode of the wave $\omega_3$ leaving the optical fiber 1. For example, the mode converter can convert the wave $\omega_3$ in LP02 mode to an $\omega_3$ wave of mode LP01. The mode converter can for example be a portion of optical fiber 12.

In the two examples of laser 10, 20 described above, the laser sources 11 employed can be laser fibers, for example ytterbium (Yb) doped laser fibers. The mode converter 12 is for example a long-period fiber grating. In this case, the lasers 10, 20 comprising the optical fiber 1 are integrally constituted of optical fibers.

The frequency doubling laser 10 and the sum frequency generating laser 20 that include the optical fiber 1 are inexpensive to produce when compared to very high added value of its components. The lasers 10, 20 also have the advantage of being compact and easy to integrate. The lasers 10, 20 are also reliable and robust and do not require complicated component design and alignment conditions.

The optical fiber can also be advantageously used in an optical amplifier.

This invention is not limited to the embodiments described by way of example. The optical fiber 1 can be installed in numerous transmission systems with good compatibility with the other optical fibers of the system.

**Claims**

1. Optical fiber (1) comprising from the centre to the periphery:

   (a) a central core (4) comprising a core dielectric matrix (3), said central core (4) adapted to transmit an optical signal;
   (b) an optical cladding(5) comprising a cladding dielectric matrix (3), said optical cladding(5) surrounding said central core (4) and adapted to confine the transmitted optical signal within the central core (4);

(c) metallic nanostructures (2) for increasing second order non-linearity effects in the fiber (1) inserted in the dielectric matrix of the central core (4) or of the optical cladding (5) in the immediate vicinity of the central core (4) whereby most part of the nanostructures (2) are in the part of the optical cladding (5) that is within the mode field of the optical fiber (1);

wherein the core dielectric matrix and the cladding dielectric cladding (3) comprises silica, wherein the diameter of the central core (4) is comprised between 2 and 10 $\mu$m and the refractive index difference Dn between the central core (4) and the optical cladding (5) is from 0.3% to 3% of the refractive index of the optical cladding (5), wherein the diameter of the central core (4) is tapered over a length of the optical fiber (1) between two ends of the fiber (1) and the ratio of the diameter of the central core at an end of the fiber (1) to the diameter of the core at the other end of the fiber (1) is comprised between 1 and 1.5 such that the refractive index profile will have the desired values for realizing the phase mismatch conditions at at least one point in the taper so that the optical fiber's phase mismatch $\Delta k$ is less than $10^4$ radian per meter, the phase mismatch being defined by the relationship:

$$\Delta k = k_3 - k_1 - k_2$$

where $k_1$ and $k_2$ are respectively the wave vectors of the first and the second incoming waves, and $k_3$ is the wave vector of the output wave.

2. The optical fiber according to claim 1, wherein the core dielectric matrix and/or the cladding dielectric matrix (3) comprises silica doped with an element selected from the group consisting of germanium (Ge), phosphorus (P), fluorine (F), boron (B), aluminum (Al), tantalum (Ta), and tellurium (Te), and a combination of two or more thereof.

3. The optical fiber according to any of claims 1-2, wherein the volumetric concentration of metallic nanostructures (2) is less than 2.0 % of the doped zone, being the central core (4) in case the nanostructures (2) are present in the central core (4) or being the doped part of the optical cladding (5) in case the nanostructures (2) are present in the optical cladding (5).

4. The optical fiber according to any of the preceding claims, wherein the metallic nanostructures (2) comprise a metal selected from the group consisting of gold (Au), silver (Ag), copper (Cu), aluminum (Al), tungsten (W), nickel (Ni), palladium (Pd), rhodium (Rh), iridium (Ir), ruthenium (Ru), molybdenum (Mo), osmium (Os), and platinum (Pt), and a combination of two or more thereof.

5. The optical fiber according to any of the preceding claims, wherein the metallic nanostructures (2) have a melting temperature greater than or equal to 950 °C.

6. The optical fiber according to any of the preceding claims, wherein the metallic nanostructures (2) have a temperature of evaporation greater than or equal to 2100 °C.

7. The optical fiber according to any of the preceding claims, wherein the most part of the metallic nanostructures (2) have an oval shape having a minor diameter being oriented perpendicularly to the longitudinal axis of the optical fiber and a major diameter being oriented parallel to the longitudinal axis of the optical fiber.

8. The optical fiber according to claim 7, wherein the minor diameter of the most part of the metallic nanostructures (2) is comprised between 1 nanometer and 200 nanometer, preferably between 5 nanometer and 100 nanometer.

9. The optical fiber according to claim 7 or 8, wherein the major diameter of the most part of the metallic nanostructures (2) is comprised between 1 nanometer and 200 micrometer.

10. The optical fiber according to any of claims 7 to 9, wherein the most part of the metallic nanostructures (2) have a ratio of major diameter over minor diameter which is comprised between 1 and 2000, preferably between 1 and 100.

11. The optical fiber according to any of the preceding claims, wherein the diameter of the central core (4) is comprised between 2 and 3 $\mu$m, and the refractive index difference Dn between the central core (4) and the optical cladding (5) is from 2 to 2.5%, of the refractive index of the optical cladding (5).

**12.** The optical fiber according to any of the preceding claims, wherein the diameter of the optical fiber (1) is constant along the length of the optical fiber (1) over which said central core's diameter is tapered.

**13.** An optical amplifier comprising at least one portion of the optical fiber (1) according to any of claims 1 to 12.

**14.** A laser (10, 20) comprising at least one portion of the optical fiber according to any of claims 1 to 13, said laser preferably comprising two pump laser sources (11) and/or a portion of an optical fiber performing mode conversion (12), preferably emitting a wavelength in the visible range.

**Patentansprüche**

**1.** Glasfaser (1), die vom Mittelpunkt zum Rand folgendes aufweist:

a) einen Mittelkern (4) mit einer dielektrischen Kernmatrize (3), der dazu ausgebildet ist ein optisches Signal zu übertragen,
b) einen optischen Mantel (5) mit einer dielektrischen Mantelmatrize (3), der den Mittelkern (4) umgibt und dazu ausgebildet ist, das übertragene optische Signal auf den Mittelkern zu beschränken,
c) metallische Nanostrukturen (2) um nichtlineare Effekte zweiter Ordnung in der Faser (1) zu vergrößern, die in die dielektrische Matrize des Mittelkerns (4) oder des optischen Mantels (5) in unmittelbarer Nähe des Mittelkerns (4) eingefügt sind, wonach die Nanostrukturen (2) größtenteils im dem Teil des optischen Mantels (5) sind, der innerhalb des Modenfeldes der Glasfaser (1) liegt,

wobei die dielektrische Kernmatrize und der dielektrische Hüllmantel (3) Siliziumdioxid aufweisen, wobei der Durchmesser des Mittelkerns (4) zwischen 2 und 10 $\mu$m liegt und der Brechungsindexunterschied Dn zwischen dem Mittelkern (4) und dem optischen Mantel (5) 0,3% bis 3% des Brechungsindexes des optischen Mantels (5) ist, wobei der Durchmesser des Mittelkerns (4) über eine Länge der Glasfaser (1) zwischen den beiden Enden der Faser (1) kegelförmig ist und das Verhältnis des Durchmessers des Mittelkerns an einem Ende der Faser (1) zu dem Durchmesser des Kerns am anderen Ende der Faser (1) zwischen 1 und 1,5 liegt, sodass das Brechungsindexprofil wenigstens an einem Punkt im Kegel die gewünschten Werte haben wird, um die Bedingungen des Phasenversatzes zu verwirklichen, sodass der Phasenversatz der Glasfaser $\Delta$k kleiner als $10^4$ Radianten pro Meter ist, wobei der Phasenversatz durch folgende Beziehung definiert ist:

$$\Delta k = k_3 - k_1 - k_2$$

wobei $k_1$ und $k_2$ die Wellenvektoren der ersten beziehungsweise der zweiten einlaufenden Wellen sind und $k_3$ der Wellenvektor der Ausgangswelle ist.

**2.** Glasfaser nach Anspruch 1, **dadurch gekennzeichnet, dass** die dielektrische Kernmatrize und/oder die dielektrische Mantelmatrize (3) Siliziumdioxid aufweisen, dotiert mit einem Element ausgewählt aus der Gruppe, die aus Germanium (Ge), Phosphor (P), Fluor (F), Bor (B), Aluminium (Al), Tantal (Ta) und Tellur (Te) und einer Kombination aus zwei oder mehr davon besteht.

**3.** Glasfaser nach einem der Ansprüche 1 bis 2, **dadurch gekennzeichnet, dass** die Volumenkonzentration der metallischen Nanostrukturen (2) kleiner als 2,0 % der dotierten Zone ist, die der Mittelkern (4) ist, falls die Nanostrukturen (2) im Mittelkern (4) vorliegen, oder die der dotierte Teil des optischen Mantels (5) ist, falls die Nanostrukturen (2) im optischen Mantel (5) vorliegen.

**4.** Glasfaser nach einem der vorhergehenden Ansprüche, **dadurch gekennzeichnet, dass** die metallischen Nanostrukturen (2) ein Metall aufweisen, das aus der aus Gold (Au), Silber (Ag), Kupfer (Cu), Aluminium (Al), Wolfram (W), Nickel (Ni), Palladium (Pd), Rhodium (Rh), Iridium (Ir), Ruthenium (Ru), Molybdän (Mo), Osmium (Os) und Platin (Pt) und einer Kombination aus zwei oder mehr davon bestehenden Gruppe ausgewählt ist.

**5.** Glasfaser nach einem der vorhergehenden Ansprüche, **dadurch gekennzeichnet, dass** die metallischen Nanostrukturen (2) eine Schmelztemperatur größer oder gleich 950°C aufweisen.

**6.** Glasfaser nach einem der vorhergehenden Ansprüche, **dadurch gekennzeichnet, dass** die metallischen Nanostrukturen (2) eine Verdampfungstemperatur größer oder gleich 2100°C aufweisen.

**7.** Glasfaser nach einem der vorhergehenden Ansprüche, **dadurch gekennzeichnet, dass** der Großteil der metallischen Nanostrukturen (2) eine ovale Form aufweist, wobei ein kleiner Durchmesser senkrecht zu der longitudinalen Achse der Glasfaser ausgerichtet ist und ein großer Durchmesser parallel zu der longitudinalen Achse der Glasfaser ausgerichtet ist.

**8.** Glasfaser nach Anspruch 7, **dadurch gekennzeichnet, dass** der kleine Durchmesser des Großteils der metallischen Nanostrukturen (2) zwischen 1 Nanometer und 200 Nanometern, vorzugsweise zwischen 5 Nanometern und 100 Nanometern liegt.

**9.** Glasfaser nach Anspruch 7 oder 8, **dadurch gekennzeichnet, dass** der große Durchmesser des Großteils der metallischen Nanostrukturen (2) zwischen 1 Nanometer und 200 Mikrometern liegt.

**10.** Glasfaser nach einem der Ansprüche 7 bis 9, **dadurch gekennzeichnet, dass** der Großteil der metallischen Nanostrukturen (2) ein Verhältnis von großem Durchmesser zu kleinem Durchmesser hat, das zwischen 1 und 2000, vorzugsweise zwischen 1 und 100 liegt.

**11.** Glasfaser nach einem der vorhergehenden Ansprüche, **dadurch gekennzeichnet, dass** der Durchmesser des Mittelkerns (4) zwischen 2 und 3 $\mu$m liegt und der Brechungsindexunterschied Dn zwischen dem Mittelkern (4) und dem optischen Mantel (5) von 2 bis 2,5% des Brechungsindexes des optischen Mantels (5) beträgt.

**12.** Glasfaser nach einem der vorhergehenden Ansprüche, **dadurch gekennzeichnet, dass** der Durchmesser der Glasfaser (1) entlang der Länge der Glasfaser (1) konstant ist, über welche der Durchmesser des Mittelkerns kegelförmig ist.

**13.** Optischer Verstärker, der wenigstens einen Teil der Glasfaser (1) gemäß einem der Ansprüche 1 bis 12 umfasst.

**14.** Laser (10, 20), der wenigstens einen Teil der Glasfaser gemäß einem der Ansprüche 1 bis 13 umfasst, der vorzugsweise wenigstens zwei Pumplaserquellen (11) und/oder einen Teil einer optischen Faser aufweist, die Modenwandlung (12) betreibt, und der vorzugsweise eine Wellenlänge im sichtbaren Bereich emittiert.


**Revendications**

**1.** Fibre optique (1) comprenant, du centre vers la périphérie :

(a) une partie centrale formant coeur (4) comprenant une matrice diélectrique de coeur (3), ladite partie centrale formant coeur (4) étant apte à transmettre un signal optique ;
(b) une gaine optique (5) comprenant une matrice diélectrique de gaine (3), ladite gaine optique (5) entourant ladite partie centrale formant coeur (4) et étant apte à confiner le signal optique transmis à l'intérieur de la partie centrale formant coeur (4) ;
(c) des nanostructures métalliques (2) destinées à augmenter les effets de non linéarité de second ordre dans la fibre (1) et introduites dans la matrice diélectrique de la partie centrale formant coeur (4) ou de la gaine optique (5) à proximité immédiate de la partie centrale formant coeur (4) de telle sorte que la plupart des nanostructures (2) sont dans la partie de la gaine optique (5) qui se trouve à l'intérieur du champ modal de la fibre optique (1) ;

dans laquelle la matrice diélectrique du coeur et la matrice diélectrique de la gaine (3) comprennent de la silice, dans laquelle le diamètre de la partie centrale formant coeur (4) est compris entre 2 et 10 $\mu$m et la différence d'indice de réfraction Dn entre la partie centrale formant coeur (4) et la gaine optique (5) représente de 0,3 % à 3 % de l'indice de réfraction de la gaine optique (5), dans laquelle le diamètre de la partie centrale formant coeur (4) diminue sur la longueur de la fibre optique (1) entre deux extrémités de la fibre (1) et le rapport du diamètre de la partie centrale formant coeur à une extrémité de la fibre (1) au diamètre du coeur à l'autre extrémité de la fibre (1) est compris entre 1 et 1,5 de sorte que le profil d'indice de réfraction a les valeurs souhaitées pour réaliser les conditions de discordance de phase à au moins un point de la diminution afin que la discordance de phase $\Delta$k de la fibre optique soit inférieure à $10^4$ radian par mètre, la discordance de phase étant définie par la relation :

$$\Delta k = k_3 - k_1 - k_2$$

où $k_1$ et $k_2$ sont respectivement les vecteurs d'onde des première et seconde ondes entrantes, et $k_3$ est le vecteur d'onde de l'onde de sortie.

2. Fibre optique selon la revendication 1, dans laquelle la matrice diélectrique du coeur et/ou la matrice diélectrique de la gaine (3) comprend de la silice dopée avec un élément choisi dans le groupe constitué du germanium (Ge), du phosphore (P), du fluor (F), du bore (B), de l'aluminium (Al), du tantale (Ta) et du tellurium (Te) ou d'une combinaison de deux de ces éléments ou plus.

3. Fibre optique selon l'une quelconque des revendications 1-2, dans laquelle la concentration volumétrique des nanostructures métalliques (2) est inférieure à 2,0 % de la zone dopée, c'est-à-dire la partie centrale formant coeur (4) dans le cas où les nanostructures (2) se trouvent dans la partie centrale formant coeur (4) ou la partie dopée de la gaine optique (5) dans le cas où les nanostructures (2) se trouvent dans la gaine optique (5).

4. Fibre optique selon l'une quelconque des revendications précédentes, dans laquelle les nanostructures métalliques (2) comprennent un métal choisi dans le groupe constitué de l'or (Au), de l'argent (Ag), du cuivre (Cu), de l'aluminium (Al), du tungstène (W), du nickel (Ni), du palladium (Pd), du rhodium (Rh), de l'iridium (Ir), du ruthénium (Ru), du molybdène (Mo), de l'osmium (Os) et du platine (Pt), et d'une combinaison de deux de ces éléments ou plus.

5. Fibre optique selon l'une quelconque des revendications précédentes, dans laquelle les nanostructures métalliques (2) ont une température de fusion supérieure ou égale à 950 °C.

6. Fibre optique selon l'une quelconque des revendications précédentes, dans laquelle les nanostructures métalliques (2) ont une température d'évaporation supérieure ou égale à 2 100 °C.

7. Fibre optique selon l'une quelconque des revendications précédentes, dans laquelle la plupart des nanostructures métalliques (2) présentent une forme ovale ayant un petit diamètre orienté perpendiculairement à l'axe longitudinal de la fibre optique et un grand diamètre orienté parallèlement à l'axe longitudinal de la fibre optique.

8. Fibre optique selon la revendication 7, dans laquelle le petit diamètre de la plupart des nanostructures métalliques (2) est compris entre 1 nanomètre et 200 nanomètres, de préférence entre 5 nanomètres et 100 nanomètres.

9. Fibre optique selon la revendication 7 ou 8, dans laquelle le grand diamètre de la plupart des nanostructures métalliques (2) est compris entre 1 nanomètre et 200 micromètres.

10. Fibre optique selon l'une quelconque des revendications 7 à 9, dans laquelle la plupart des nanostructures métalliques (2) ont un rapport du grand diamètre sur le petit diamètre qui est compris entre 1 et 2 000, de préférence entre 1 et 100.

11. Fibre optique selon l'une quelconque des revendications précédentes, dans laquelle le diamètre de la partie centrale formant coeur (4) est compris entre 2 et 3 $\mu$m, et la différence d'indice de réfraction Dn entre la partie centrale formant coeur (4) et la gaine optique (5) représente de 2 % à 2,5 % de l'indice de réfraction de la gaine optique (5).

12. Fibre optique selon l'une quelconque des revendications précédentes, dans laquelle le diamètre de la fibre optique (1) est constant sur la longueur de la fibre optique (1) sur laquelle le diamètre de ladite partie centrale formant coeur diminue.

13. Amplificateur optique comprenant au moins une partie de la fibre optique (1) selon l'une quelconque des revendications 1 à 12.

14. Laser (10, 20) comprenant au moins une partie de la fibre optique selon l'une quelconque des revendications 1 à 13, ledit laser comprenant de préférence deux sources de laser de pompage (11) et/ou une partie d'une fibre optique effectuant une conversion de mode (12), de préférence émettant une longueur d'onde dans le spectre visible.

Figure 1

$$\chi^{(2)}(\omega_3; \omega_1, \omega_2)$$

Figure 2

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2008180796 A

### Non-patent literature cited in the description

- **A. PODLIPENSKY et al.** Second harmonic generation from ellipsoidal silver nanoparticles embedded in silica glass. *Optics Letters,* 01 May 2003, vol. 28 (9
- **AOXIANG LIN et al.** Ag nanocrystal-incorporated germano-silicate optical fiber with high resonant non linearity. *Applied Physics Letters,* 2008, vol. 93, 021901

- **PRUNERI V.** Recent advances in poled optical fibers. *FIBERS AND OPTICAL PASSIVE COMPONENTS, 2005. PROCEEDINGS OF 2005 IEEE/ LEOS WORKSHOP ON MONDELLO,* 22 June 2005, 164-167
- **FAGE-PEDERSEN J et al.** Poling of glass waveguides by a metal-induced Z<(3)> enhancement. *LASERS AND ELECTRO-OPTICS EUROPE, 2003. CLEO/EUROPE. 2003 CONFERENCE O N MUNICH,* 22 June 2003, 213-213